Europäisches Patentamt

European Patent Office

Office européen des brevets

(19)

(11) EP 1 591 887 A1

(12) EUROPEAN PATENT APPLICATION
published in accordance with Art. 158(3) EPC

(43) Date of publication:
02.11.2005 Bulletin 2005/44

(51) Int Cl.⁷: G06F 9/44

(21) Application number: 03815603.0

(86) International application number:
PCT/JP2003/009591

(22) Date of filing: 29.07.2003

(87) International publication number:
WO 2004/068342 (12.08.2004 Gazette 2004/33)

(84) Designated Contracting States:
AT BE BG CH CY CZ DE DK EE ES FI FR GB GR
HU IE IT LI LU MC NL PT RO SE SI SK TR
Designated Extension States:
AL LT LV MK

(30) Priority: 28.01.2003 JP 2003019588

(71) Applicant: Catena Corporation
Tokyo 135-8565 (JP)

(72) Inventor: ARAI, Osamu, c/o CATENA Corporation
Tama-shi, Tokyo 206-0033 (JP)

(74) Representative: Michalski, Stefan
Maiwald Patentanwalts GmbH,
Neuer Zollhof 2
40221 Düsseldorf (DE)

(54) SOFTWARE DEVELOPMENT PREPROCESSING METHOD, SOFTWARE CONTROL METHOD, SOFTWARE DEVELOPMENT METHOD, AND SOFTWARE DEVELOPMENT DEVICE

(57) A mathematical structure model of a program based on a word unit defining a word state is created. More specifically, a directed graph is created according to a semiorder relationship between word-based program groups. According to this directed graph, an adjacency matrix is obtained. The adjacency matrix thus obtained is subjected to topological sort based on the depth-first search. According to the order obtained as a result, the word-based program groups are rearranged. Thus, it is possible, for example, to evade repetition.

FIG.7

**Description**

Technical Field

The present invention relates to software developments, and more particularly to a software development preprocessing method, a software control method, a software development method, and a software development device based on a mathematical way of thinking.

Background Art

Generally, a program is composed of the following three portions:

(1) Declaration of region, memory allocation, and its related address of constants and variables;
(2) Sentence that represents control sequence; and
(3) Execution condition sentence and calculation execution sentence that determine value given to memory allocated region

When software is developed, a user is mainly involved in (3) alone. A system engineer and a programmer take charge of the rest of the portions. We input data from a screen and a keyboard by a program which controls a computer itself, read data from a file, and write data in a file. A program for operating a device used for this portion does not depend on requirements, and the system engineer and the programmer are responsible. Particularly in (2) among these, there is a fixed (given) structure nondependent on the requirements. Accordingly, we can automatically generate a program only by deciding (i.e., defining) (3) dependent on the requirements. This structure is called "structure of program" according to Lyee (registered trademark) methodology (see Patent Documents 1 to 6, and Nonpatent Documents 3 and 4).
We usually use logical relations such as Hoar logic and λ calculus to represent program structures (see Nonpatent Documents 1 and 2). The program structure representation of this style assists understanding of behavioral structures of these programs. Thus, in the case of a declarative type (style) program, we can understand and analyze the program. However, an analysis conducted through such an approach makes obvious a difficulty of verifying and/ or modifying semantics because of complexity of logical representation.

(Patent Document 1)

Pamphlet of International Publication No. WO 97/16784 A1

(Patent Document 2)

Pamphlet of International Publication No. WO 98/19232 A1

(Patent Document 3)

Pamphlet of International Publication No. WO 99/49387 A1

(Patent Document 4)

Pamphlet of International Publication No. WO 00/79385 A1

(Patent Document 5)

Pamphlet of International Publication No. WO 02/42904 A1

(Patent Document 6)

Pamphlet of Japanese National Publication No. 2002-202883

(Nonpatent Document 1)

"The Formal Semantics of Programming Languages" by Glynn Winskel, The MIT Press, 1993

(Nonpatent Document 2)

"Semantics with Applications, A Formal Introduction" by Hanne Riis Nielson and Flemming Nieslon, John Wiley & Sons, 1992

(Nonpatent Document 3)

"Principle of Lyee Software" by Fumio Negoro, Proceedings of 2000 International Conference on Information Society in the 21st Century (IS2000), Aizu, Japan, November 5 - 8, 2000, pp. 441 - 446.

(Nonpatent Document 4)

"Intent Operationalisation for Source Code Generation" by Fumio Negoro, Proceedings of the 5th World Multi-Conference on Systemics, Cybernetics and Informatics (SCI2001), Orlando, USA, July 22 - 25, 2001

As described above, the conventional representation of the program structures using the logical relations enable understanding and analyzing of the program especially in the case of the declarative type (style) program. However, the analysis conducted through such an approach has made obvious the difficulty of verifying and/or modifying semantics because of the complexity of the logical representation.

The present invention has been developed to solve various problems of the aforementioned conventional technologies, and it is an object of the invention to provide a method of easily verifying and modifying semantics even if a program has complex logical representation.

Accordingly, an object of the invention is to realize higher efficiency, a higher speed, and higher performance in software developments by Lyee (registered trademark) methodology.

Other objects of the present invention are to provide a software development preprocessing method, a software control method, a software development method, and a software development device which can achieve the aforementioned object.

In addition to the above, it is an object of the invention to exhibit, by mathematically representing a program structure of the Lyee (registered trademark) methodology, its correctness, and its nature of having no order.

Disclosure of the Invention

The present invention is characterized by representing an order relation among word-based programs for obtaining values for areas of words concerning a software development request in a directed graph, executing search against the directed graph, and rearranging a group of the word-based programs based on a result of the search.

The present invention is characterized by generating an adjacent matrix from an order relation among word-based programs for obtaining values for areas of words concerning a software development request, executing search against the generated adjacent matrix, and rearranging a group of the word-based programs based on a result of the search.

Here, "search" means various algorithms including Topological Sort (described later), Depth-First Search (described later), Breadth-First Search, Iterative Deeping, Heuristic Search, Hill Climbing, Best-First Search, Euler's single stroke of a brush, Dijkstra method, and the like.

The present invention is also characterized by generating an adjacent matrix and a state vector from a significance definition relation among words in user requirements of a software development, calculating the adjacent matrix and the state vector based on a predetermined axiom, and grasping states of the words from a result of the calculation.

Further, the invention is characterized by representing an order relation among word-based programs for obtaining values for areas of words concerning a software development request in a directed graph.

Here, a partial order or a total order is conceivable as the order relation.

"Software" used here has a broad meaning. That is, it is a concept including both a development request from a user and an object program which satisfies the request.

The present invention is also characterized by constituting a basic structure unit of units in which a set concerning an order relation among word-based programs for obtaining values for areas of words concerning a software development request is closed, and representing the constituted basic structure unit in a directed graph in which the structure unit is regarded as a node.

Further the present invention is characterized by generating an adjacent matrix from an order relation among word-based programs for obtaining values for areas of words concerning a software development request, executing search against the generated adjacent matrix to rearrange a group of the word-based programs based on a result of the search, and generating codes by applying the rearranged group of the word-based programs to Lyee methodology, thereby obtaining the required software.

The present invention is also characterized by comprising an adjacent matrix calculation section for generating an adjacent matrix from an order relation among word-based programs for obtaining values for areas of words concerning a software development request, a search section for executing search against the generated adjacent matrix to rearrange a group of the word-based programs based on a result of the search, and a generation section for generating codes by applying the rearranged group of the word-based programs to Lyee methodology. These sections can all be automated. Thus, a process from elimination of iteration processing to software generation can consistently be made automatic, thereby greatly increasing software production speed and efficiency.

Here, "directed graph creation section" (described later) is a unit for realizing a function of creating a directed graph in which each word contained in requirements from a user who requests a software development is represented by a node, and a partial ordered relation (or all order relation) $a \leq b$ ("$\leq$" is defined as a symbol to mean that b is created from a, similar hereinafter) between start and end points by an arrow while discriminating an input word from a state word. For example, the section can be realized as a software having such a function programmed therein, or a read-only memory (ROM) having the coded software written therein.

Here, "input word" is a final end-point word having no $f_i$ in an equation 1 (described later), and "state word" is a word which is not an input word.

"Adjacent matrix calculation section" is a unit for realizing a function of obtaining, by calculation, adjacent matrix which represents a relation among word-based programs in a form of the equation 1 (described later), and representing the relation again by a matrix. For example, the section can be realized as software having such a function programmed therein, or a read-only memory (ROM) having the coded software written therein.

Further, "search section" has a function of generally realizing search which is an algorithm containing various methods described above. For example, the section can be realized as software having such a function programmed therein, or a read-only memory (ROM) having the coded software written therein.

"Topological sort section" (described later) is a unit for realizing a function of executing Depth-First Search (described later) against the obtained directed graph, and aligning node columns (sequences of numbers) while obtaining nodes during return through a search path from a reached place. For example, the section can be realized as software having such a function programmed therein, or a read-only memory (ROM) having the coded software written therein.

Here, "Depth-First Search" is an algorithm of:

(1) advancing through interconnected nodes starting from a start-point node to avoid overlapping,
(2) returning to a node having a place to visit when there are no more places to visit (comeback),
(3) advancing again from the node to which the process has returned as in the case of (1), and
(4) finishing the process when there are no more places to advance to.

According to the present invention thus defined, the iteration is avoided, thus it is possible to realize a software development with higher efficiency, higher speed and higher performance.

Furthermore, according to the present invention thus defined, preprocessing to eliminate iteration is automatically carried out, and an object program is automatically generated by the Lyee (registered trademark) methodology based on the preprocessed word-based program thus obtained. That is, it is possible to automate a process from sophistication (alignment) of the user requirements to the generation of the object program. Thus, the invention provides, to a software industry, a great advantage of greatly increasing efficiency, productivity, quality, and the like of software production.

Brief Description of the Drawings

FIG. 1 is a flowchart showing a structure of a program for calculating an equation 1 for a state word $\alpha$.
FIG. 2 shows an example of a directed graph for explaining an order having a relation of $a \leq b$ (b is created from a).
FIG. 3 shows an example of a directed graph.
FIG. 4 is a directed graph showing a specific partial ordered relation set formed by nodes 1 to 8.
FIG. 5 is a flowchart explaining a topological sort operation.
FIG. 6 is a flowchart explaining an automatic control operation carried out to prevent iteration by using topological sort when a word-based logical vector in Lyee (registered trademark) methodology are set as nodes.
FIG. 7 is a block diagram showing a functional structure when the present invention is realized as a software development device.

Best Mode for Carrying Out the Invention

The present invention solves the aforementioned problems of the conventional art by using an approach generated from a "directed graph" technology and different from that of the conventional case.

Hereinafter, a specific embodiment of the present invention will be described with reference to the accompanying drawings.

A first chapter gives an outline of a software structure (program structure of a word unit) according to Lyee (registered trademark) methodology which is a target to be improved by the invention and which becomes a premise of the invention, and a concept of "state" which characterizes the Lyee (registered trademark) methodology. A second chapter describes a word-based program by a mathematical model. A third chapter describes topological sort which is a specific embodiment of the present invention.

I. What is a word-based program?

(I-1) Word-based program

Software by the Lyee (registered trademark) methodology basically comprises a word-based program. In the word-based programming, a requirement is represented by a set of words, and each word is defined by a declarative statement. The word-based program is composed of two kinds of main components. One component is a word component. In the word-based programming, the requirement is a set of words containing word names, definition of work calculation equation, conditions of the word calculation equation, and word attributes (input/output, data type, and other attributes), and defined in a form of not an assignment statement but a declarative statement.

For example, a requirement is as shown in Table 1 in which $S_w$ is a declarative statement defining a word w.

(Table 1)

|  | Word name | Attribute | Condition | Definition |
|---|---|---|---|---|
| Word | a | output | d | b + c |
| Word | c | input integer |  | 15 |
| Word | b | output | c > 0 | $2 \times c + 5$ |
| Word | d | input boolean |  |  |

The other component is a component of a control program. According to the control program, execution of a word-based program is simply iterated until a state is reached in which no change occurs in value for any word even if the execution is iterated more. Definition of a word "a" uses a word "b", and the word "b" is given after the word "a". However, a user does not need to designate execution order (control logic) of these definitions. On the other hand, in procedural processing, naturally, even in the case of logical programming which is a kind of declarative programming, execution order of one line of a program gives an influence onto an execution result.

A flow of this processing will be described by taking an example of the Table 1.

First, the word "a" is executed. Words "d", "b" and "c" have not been executed, and thus a value of the word "a" cannot be decided. Next, the input word "c" is executed. As there are no execution conditions, a value of the word "c" is decided. For example, when the value of the word "c" is +3, definition "$2 \times c + 5$" of the word "b" can be executed since an execution condition "c > 0" is true, and a value of the word "b" is calculated to be +11, and can be output. The word "d" is an input word, and d = true is established as there are no execution conditions. Even after all the words have been processed, however, a value of the word "a" is still undecided. As a result, the program returns to the first, and the processing is executed again.

In the second round of execution, since d = true is established and the values of the words "b" and "c" are decided respectively as +11 and +3, a value +14 of the word "a" is obtained, and this value is output to a proper device. As the values of the words "c", "b", and "d" have been calculated, the values of these words have all been decided. Thus, through the second round of execution, the values of all the four words are decided.

Next, the concept of "state" will be described. Data types of words are numerals, booleans, characters, or others which can be processed by a computer. To control logical order, a concept of "state" present in each word must be introduced. In effect, a word state becomes one of a plurality of states: truth, falsehood, and the undecided. Meanings thereof are as follows.

Truth: value is decided, and user requirement is satisfied.

Falsehood: value is decided, but user requirement is not satisfied.

The undecided (or null): value is not decided.

An initial state of a word is always undecided, meaning that a value of the word has not been transferred (moved), or has not been calculated. A word defined by a name is called an end-word, and a group of words used in calculation conditions or equations to define other words is called a group of start-words. A process in which all the words in the requirements are executed once is called one-path of process.

The value of a word is decided and the state thereof becomes true when the states of its start-words become entirely true. A state of a word not used as a start-word is not concerned with a state of an end-word. The manner in which a one-path process is repeated is called a repetition process (or an iteration process). By continuing iteration processing until there is no more change in state of the word it is possible to use the word for output. The state of each word becomes true, false, or remains undecided. If there is an undecided word, it is necessary to check whether an input word exists in this system, or whether there is a closed loop.

The closed loop means that a word used itself as a definition in either direct or indirect way, or that the requirements are incomplete. Execution conditions must be exclusive, and negation must be explicitly defined. That is, a sum total of conditions must constitute a whole of no overlapping (in other words, a sum total of conditions becomes 1, no more and no less than 1).

Thus, the word-based programming will generate, a control logic part of the software automatically.

(I-2) Program structure of every word

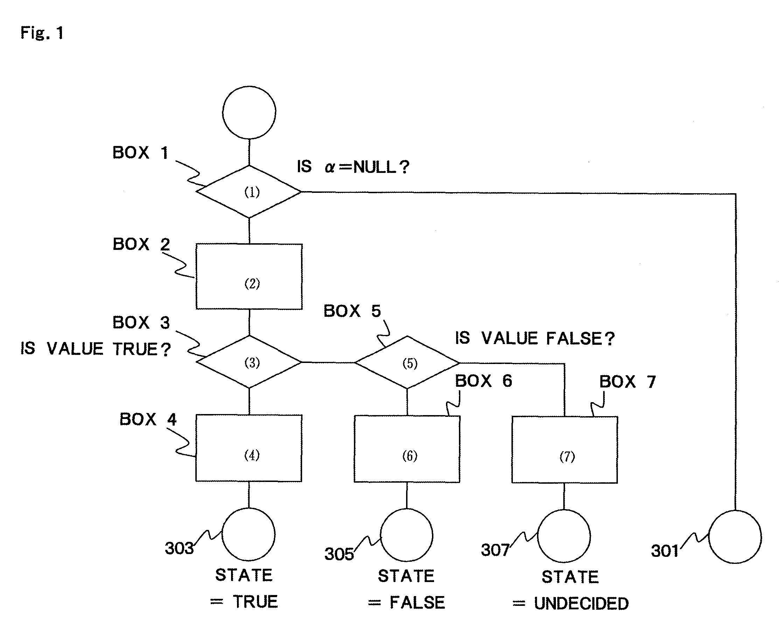

FIG. 1 is a flowchart showing a structure of the aforementioned word-based program. Referring to FIG. 1, the program structure and an operation will be described. A symbol $\alpha$ of FIG. 1 denotes a word name.

(1) Box 1

First, determination is made as to whether to carry out a statement (declarative statement). If a state of a word $\alpha$ is not null, steps thereafter are not executed to end the process (301). If null, the process proceeds to a box 2.

(2) Box 2

If states of start-words are all true, a word definition equation (calculation equation) is calculated, and a result thereof is stored in a temporary area. Accordingly, the temporary area becomes necessary. If any one of the start-words is other than true, the definition equation is not calculated.

(3) Box 3

Based on a result of the execution or nonexecution of the definition equation, determination is made as to whether a value significant (matching user requirements) for the word $\alpha$ has been decided or not. When all the start-words are true, the value of the word is decided. However, even if all the start-point words are true, the word value may be false depending on user requirements. If a significant value is decided for the word, the process proceeds to a box 4. If a value is not decided for the word, or a decided value is false, the process moves to a box 5.

(4) Box 4

When the decided value of the word $\alpha$ matches the user requirements, a result is recorded in a normal area. Accordingly, the normal area becomes necessary. In this case, a state of the word $\alpha$ is true (303).

(5) Box 5

This box is reached when a value of the word is undecided or a decided value is false in the box 3. In the box 5, which of the above states the word is in is determined. If the value of the word is false because of the user requirements, or a start value is false, a state of the word is false. The process proceeds to a box 6 if the state of word is false, and to a box 7 if the state of the word is not false.

(6) Box 6

A flag indicating falsehood of a value is set. Such flags are necessary for all the words in a false process. Alternatively, a value indicating falsehood of a state is stored in the normal area. In this case, a state of the word becomes false (305).

(7) Box 7

1 is added to a comeback (repetition) counter to determine whether to execute repetition process. Accordingly, the comeback (repetition) counter becomes necessary (see Nonpatent Document 3). In this case, a state of the word becomes null (307).

(I-3) Program for controlling the whole system and its structure

A program for controlling the whole system is called a Tense Control Function (see Nonpatent Document 3). A control program for properly performing a repetition process is encapsulated in this program. As described above with reference to FIG. 1, if a state of one start-word is false, a state of an end-word surely becomes false as well. Even if states of start-words are all true, when a false value is assigned by the user requirement conditions, the state of the end-word becomes false. Thus, to judge whether repetition occurs or not, it is only necessary to determine whether the start-word with the value of a null (undecided) is contained in a definition equation (statement).

If it has even one start-word with the value of null, the repetition processing takes place completely. However, if it is represented by a directed graph, when a closed loop is included, a state of an end-word is not changed from a null state. When this system has no start-words, the end-word is not changed from the null state. Accordingly, in such a state, the repetition process is not finished but enters a permanent loop. To avoid such a situation, there are program codes used for controlling the repetition counter in the Tense Control Function program ($\Phi$) to control every word $L(\alpha)$ of the program.

Each time a word becomes null, each word program adds 1 to the repetition counter. As a condition to pass through a series of repetition process, equality of a value of the repetition counter to a value of the last repetition process is used. This state is called "no change in the state".

In logical programming, especially in a standard prolog which is a kind of nonprocedural type programming language (Prolog: nonprocedural type programming language), backtracking (reexecution) falls into a permanent loop. Other improved type prologs avoid permanent loops by using wait or freeze. In the word-based programming, such a loop is avoided by using the aforementioned mechanism.

An example of the Tense Control Function program ($\Phi$) used in the Lyee (registered trademark) methodology will be described below. By using properties in which "value of Ctr is the number of words $L(\alpha)$ whose state of undecided" is set as variable properties of a loop, this program can be proved by Hoare's logic. An example below is a case in which there are three words of x, y and z.

```
[Program code for Φ]

PCtr = 1      /* PCtr = Previous Repetition Counter */

Ctr = 0       /* Ctr = Repetition Counter */

While PCtr ≠ Ctr do

   PCtr = Ctr

   Ctr = 0

      L(x)  /* each word program has the following function

               for controlling state and repetition; if the

               state of start-word is null, then the state

               of word L(α) = undecided and Ctr = Ctr + 1,


               else, the state of word L(α)= decided */

      L(y)

      L(z)

   End

   /* The value of Ctr is the number of words L(α) whose

   states are undecided */
```

This program has the following meaning:

1) The program ends; and
2) When stopped, the value of a variable Ctr is the number of words L($\alpha$) whose states are undecided.

When the program stops, in accordance with a word definition equation, a value of either truth or falsehood is allocated in a normal case to states of the words L($\alpha$) whose start-word is in the system. The state of the word $\alpha$ is undecided (null) in the following cases:

1) the word $\alpha$ is in a closed loop or after the closed loop;
2) the word $\alpha$ has no exclusive conditions, the exclusiveness being defined in a manner that if "$((X \geq y)$ or $(x < y))$" is always true and "$((x \geq y$ and $(x < y))$" is always false, x and y are exclusive; and
3) the start-word of the word $\alpha$ is not in the same system.

II. Mathematical principle of word-based program

The program structure of the word-based program can be proved by Hoare's theorem. However, in the case of an analysis conducted through such approach as Hoare's theorem, because of complexity of a logical representation style, it is difficult to verify and modify semantics of the word-based program. Thus, the present invention will be described by using an adjacent matrix which is another approach based on the directed graph technology and forming the program structure of the word-based program into a mathematical structure model. In this chapter, the program structure of the word-based program will first be represented by the mathematical structure model, and its characteristics will be described. Specifically, a directed graph model and an adjacent matrix model will be described.

1.

When Lyee (registered trademark) requirements specifications are treated more formally, they can be represented as a system of equations in which a function x is defined in each of points 1, 2, ... n through constants and the value of x in other points:

$$x(i) = fi\ (x(1), x(2), ..., x(n)), i = 1, 2, ..., n \qquad \text{(Equation 1)}$$

The equation 1 is a function which represents a definition equation of an i-th word x in a system having n words. X(i) represents i-th word x which is an end-word. Fi (x(1), x(2), ..., x(n)) is a function which represents a definition equation of the end-word x(i), showing that the definition equation comprises any of $1^{st}$ to n-th words in the system.

The Lyee (registered trademark) specifications of the equation 1 can be rewritten as follows:

$$X(i) = F\ (x(i)), \qquad i = 1, 2, ..., b \qquad \text{(Equation 2)}$$

A simpler form is as follows:
$X = F\ (x)$

(II-1) Principle of the present invention: directed graph and its adjacent matrix

A relation between a start-word and an end-word can be written by a directed graph. In the directed graph, each word is represented by a node, and a relation between words is presented by an arrow. A node that is a start point of the arrow represents a start-word, and a node that is an end point represents an end-point word. It also defines the order having a relation $a \leq b$ (word b is created from word a).

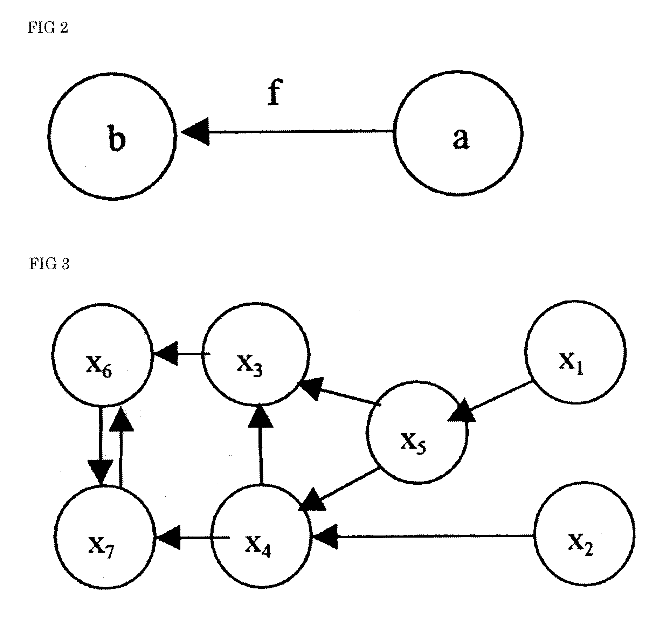

FIG. 2 shows an example of a directed graph to explain an order having a relation (f) of $a \leq b$ (b is created from a).

As shown in the drawing, words make a partial ordered set having the relation $a \leq b$. That is, the directed graph of the drawing can be regarded as a set of elements of the words a and b and elements constituting a partial ordered relation (arrow) between these elements.

The directed graph can be represented by an adjacent matrix. The adjacent matrix representing a relation among n words is represented by a matrix of $n \times n$, and this is called an adjacent matrix F. In the adjacent matrix, n word names are arranged in each of row and column headings. In the case of the row heading, n words are end-words, and n words are start-words in the case of the column heading.

When an equation of an i-th word (i.e., program $f_i\ (x(i))$ for generating a word x(i) in accordance with the

equation 1) uses $x_j$ as a start-word, an element $f_{ij}$ (i = 1, ..., n; j = 1,..., n) of the adjacent matrix F representing an intersection point between an i-th row and the start-word $x_j$ of the adjacent matrix is 1. If not, it is 0. In the equation for generating the end-word $x_i$, use of the start-word $x_j$ is indicated by 1 or 0. (Not that "$f_{ij}$ (i = 1, ... , n; j - 1, ... , n)" indicates a word x(j) among words constituting the program $f_i$ (x(i)) for generating the word x(i), and in this case, i is any one of 1 to n, and j, 1 to n).

A relation between words in Example 1 in which each word is defined in the form of the equation 1 as in an equation 3 below will be specifically described based on representation of two forms, a directed graph, and an adjacent matrix.

(Example 1)

Input words (the last end-words having no $f_i$ (x(i))) are indicated by $x_1$ and $x_2$, and state words (words other than input words, i.e., words whose values are generated by program) are indicated by $x_3$, $x_4$, $x_5$, $x_6$ and $x_7$. A relation between these words is represented by the following equation 3 in the form of the equation 1:

$$x(1) = a_0$$

$$x(2) = b_0$$

$$x(3) = f_3 (x(4), x(5))$$

$$x(4) = f_4 (x(2), x(5))$$

$$x(5) = f_5 (x(1))$$

$$x(6) = f_6 (x(3), x(7))$$

$$x(7) = f_7 (x(4), x(6)) \tag{Equation 3}$$

FIG. 3 shows an example of a directed graph representing a state of the Example 1.

That is, in the shown example, $x_1$ and $x_2$ are input words having no $f_i$ (x(i)). Accordingly, these words are not end points of any arrows. The word $x_3$ is generated from $x_4$ and $x_5$. Thus, the word $x_3$ is an end point of an arrow starting from $x_4$ and $x_5$. Similarly, arrows indicate start and end points so as to show that $x_4$ is generated from $x_2$ and $x_5$, $x_5$ is generated from $x_1$, $x_6$ is generated from $x_3$ and $x_7$, and $x_7$ is generated from $x_4$ and $x_6$. In other words, the state defined by the equation 3 is equivalent to the state represented by the directed graph of FIG. 3.

In this case, the adjacent matrix of the Example 1 is represented by an equation 4.

$$F = \begin{array}{c} \\ \mathbf{x}_1 \\ \mathbf{x}_2 \\ \mathbf{x}_3 \\ \mathbf{x}_4 \\ \mathbf{x}_5 \\ \mathbf{x}_6 \\ \mathbf{x}_7 \end{array} \begin{array}{ccccccc} \mathbf{x}_1 & \mathbf{x}_2 & \mathbf{x}_3 & \mathbf{x}_4 & \mathbf{x}_5 & \mathbf{x}_6 & \mathbf{x}_7 \\ \left[ \begin{array}{ccccccc} 0 & 0 & 0 & 0 & 0 & 0 & 0 \\ 0 & 0 & 0 & 0 & 0 & 0 & 0 \\ 0 & 0 & 0 & 1 & 1 & 0 & 0 \\ 0 & 1 & 0 & 0 & 1 & 0 & 0 \\ 1 & 0 & 0 & 0 & 0 & 0 & 0 \\ 0 & 0 & 1 & 0 & 0 & 0 & 1 \\ 0 & 0 & 0 & 1 & 0 & 1 & 0 \end{array} \right] \end{array}$$

$$\text{(Equation 4)}$$

As described above, the row heading of the adjacent matrix F is an end-word, and the column heading is a start-word. Headings are added to the adjacent matrix to assist understating which start-word or end-word each row or column indicates and to simplify an explanation.

The adjacent matrix F of the equation 4 will be applied and described for each row. A 1st line of the end-word $x_1$ shows that all intersection points with start-word columns are 0, and that the end-word $x_1$ has no start point (i.e., being an input word). The same holds true for the end-word $x_2$. A 3rd line of the end-word $x_3$ shows that intersection points with the columns of the start-words $x_4$ and $x_5$ are 1, intersection points with the other start-word columns are 0, and the end-word $x_3$ has x4 and x5 as start-words. Thereafter, it is similarly shown that every word from the end-words $x_4$ to $x_7$ has (or does not have) which words as start-words.

Each row of the adjacent matrix of the equation 4 can be represented by the following equation. A left side indicates an end-word which becomes a row heading, and a right side indicates a start-word which becomes a column heading having a value of an intersection point set to 1. "0" on the right side indicates that values of all intersection points are "0".

$$x_1 = 0$$

$$x_2 = 0$$

$$x_3 = x_4 + x_5$$

$$x_4 = x_2 + x_5$$

$$x_5 = x_1$$

$$x_6 = x_3 + x_7$$

$$x_7 = x_4 + x_6$$

Here, "+" does not mean "addition" in normal four operations as described later. In the equations representing the word relations in the specification, it is used as an operator (called "addition operator" hereinafter) to define words on a left side by adding, when there are a plurality of start-words of a partial ordered set for deciding state words (end-words) on the left side, these words together.

As described above, it can therefore be said that the word relation defined by the equation 3 is equivalent to the relation represented by the directed graph of FIG. 3 and the relation mathematically described by the adjacent matrix of the equation 4.

(II-2) The state model for end-word represented by adjacent matrix F and the state vector X

In the (II-1) section, the directed graph and the adjacent matrix have been considered as models for representing " the relations with other end-words" of n words. Next, a model for representing "states of values of end-words" of n words will be described. First, states of n words as start-words are recorded in a vector X of a vertical column (vector means a matrix having only one column or row). To explain based on the example of the words represented by the adjacent matrix of the equation 4, for example, a vector X indicating states of start-words in an order of representing the start-words, an order from $x_1$ to $x_7$, can be represented by the following equation 5. To assist understanding of which start-word each row indicates and to simplify explanation, a heading is added to a vector.

$$X = \begin{matrix} x_1 \\ x_2 \\ x_3 \\ x_4 \\ x_5 \\ x_6 \\ x_7 \end{matrix} \begin{bmatrix} +1 \\ +1 \\ -1 \\ \text{null} \\ \text{null} \\ \text{null} \\ \text{null} \end{bmatrix}$$

(Equation 5)

In this case, the vector X indicates that states of the start-words $x_1$ and $x_2$ are "+1", a state of the start-word $x_3$ is "-1", and states of the start-words $x_4$ to $x_7$ are "null".

States of values to enable generation of words are set to the following three kinds:

+1 : value has been decided to be true
-1 : value has been decided to be false
null : value is undecided

Initial values of input words are as follows:

1 : value has been decided to be true (state of being properly input)
-1 : value has been decided to be false (state of being improperly input)

Accordingly, even if the equation 1 is executed, the state is not changed.

An initial value of a state word is null:

null : value is undecided (state of having not moved or not been calculated)

As for the state word, the operation of a state vector X indicating a state of a word on the adjacent matrix F indicating the word relation means execution of the equation 1 in order of the words in a row. Processing of using n equations in sequence is called sequential processing. When states of the start-words are all +1, a state of the state word becomes +1 (true), and a value of the state word has been decided.

A state of a word that is not a start-word has no relation with a state of an end-word of the equation. Repetition of the sequential processing is called iteration processing. Even if it is repeated, a word that has not been decided to be "true" becomes a false state (-1) or remains null. Representation of the above in a "directed graph" is as follows.

(1) A value of a node (word) is not decided if a node is not included in a closed loop and if values of start-words are false when the start-words are searched one after another from a node corresponding to any one of start-words. A value of a node is not decided unless a value of a word satisfies user requirements. A value of a node (word) is decided to be false even if the value is successfully calculated.
(2) A value of a node is decided to be true if a node is not included in the closed loop, and if all start-words are true when the start-words are searched one after another from the node.
(3) A value of a node (word) remains null when the node is included in the closed loop but a start-word of the node is not present in the system.

(Example 2)

In the case of the Example 1, in FIG. 3, the states of $x_3$, $x_4$, $x_5$, $x_6$ and $x_7$ depend on states of $x_1$ and $x_2$ which are final start-words in this case. As obvious from the drawing, $x_5$ is true when $x_1$ which is a final start-word becomes true. The words $x_4$ and $x_5$ become true when $x_1$ and $x_2$ which are final start-words are true. $x_6$ and $x_7$ remain null as they are in a loop.

(II-3) Calculation of adjacent matrix F and state vector X

States of n words are recorded in the vector X (matrix having one column) according to the order of the words. An arithmetic operator is defined so that the state may become the same state as is calculated by performing an iteration processing using the adjacent matrix F and the state vector X. In other words, multiplication of F and X is as follows:

$$X_m = FX_{m-1}$$

where, $X_m$, $X_{m-1}$: column vector of n words

$X_0$: all elements of initial vector of word are null

$x_{m,i}$ of $X_m$: (-1) or (+1) or (null)

$f_{i,j}$ of F: 0 or 1

n: items of words

m: repetition times          (Equation 6)

The element $x_{m,i}$ (word $x_i$ after iteration processing of m times) of the state vector $X_m$ which is a product of the adjacent matrix F and the state vector X of m times is represented by the following equation:

$$X_{m,i} = f_{i1} \cdot X_{m,1} + \cdot + F_{i(i-1)} \cdot X_{m,(i-1)} + f_{ii} \cdot x_{m-1,i} + F_{i(i+1)} \cdot X_{m-1,i+1} + \cdot +$$

$$f_{in} \cdot x_{m-1,n} \qquad \text{(Equation 7)}$$

An index 1 or 0 (1 when a word becomes a start-word, and 0 when the word does not become a start-word) indicating use of a start-word Xj of a j column in an end-word of an i-th row of the adjacent matrix F is given to $f_{ij}$ on the left side of a multiplication operator ($\cdot$). Three kinds of indexes, +1 (true), -1 (false), and null (null means vacant here) indicating a state of the start-word $x_i$ represented at the i-th row of the vector X during the iteration processing of m times are given to $x_{m,i}$ on the right side of the multiplication operator ($\cdot$).

By taking the example of the adjacent matrix F of the equation 4 and the vector X of the equation 5, third iteration processing of the end-word $x_3$ is represented by the following equation 7.

$$X_{3,3} = f_{3,1} \cdot x_{3,1} + f_{3,2} \cdot x_{3,2} + f_{3,3} \cdot x_{2,3} + f_{3,4} \cdot x_{2,4}$$

$$+ f_{3,5} \cdot x_{2,5} + f_{3,6} \cdot x_{2,6} + f_{3,7} \cdot x_{2,7}$$

$$X_{3,3} = 0 \cdot (+1) + 0 \cdot (+1) + 0 \cdot (\text{null}) + 1 \cdot (+1) + 1 \cdot (+1) + 0 \cdot (\text{null})$$

$$+ 0 \cdot (\text{null})$$

An intersection point between $y_3$ row and the start-word $x_1$ column of the equation 4 is "0", a 1st row of a column indicating the state of the word $x_1$ of the equation 5 is "+1", and thus $f_{3,1} \cdot x_{3,1}$ is "0·(+1)". For all the intersection points between the y3 row and the start-word columns of the equation 4, indexes thereof and corresponding state indexes shown in the equation 5 are connected through the multiplication operator, enumerated by using an addition operation, and a result is represented by the following equation.

Here, an operation result of the multiplication operator ($\cdot$) is defined as follows:
(Axiom 1)

$$0 \cdot (-1) = (+1) \quad 0 \cdot (\text{null}) = (+1) \quad 0 \cdot (+1) = (+1)$$

$$1·(-1) = (-1)\ 1·(null) = (null)\ 1·(+1) = (+1) \hspace{3cm} \text{(Equation 8)}$$

The axiom of the equation 8 indicates the following. If a start-word index is 0, a state of the start-word becomes true (+1) irrespective of the state thereof, giving no influence on a state of an end-word. If a start-word index is 1, no change occurs in a state of the start-word, and the state of the start-word gives influence on a state of the end-word.

Next, an operation result of the addition operator (+) is defined as follows. A value used for the addition operator is an operation result of the axiom 1.

(Axiom 2)

$$(-1) + (-1) = (-1)\ (-1) + (null) = (-1)\ (-1) + (+1) =$$

$$(-1)$$

$$(null) + (-1) = (-1)\ (null) + (null) = (null)$$

$$(null) + (+1) = (null)$$

$$(+1) + (-1) = (-1)\ (+1) + (null) = (null)$$

$$(+1) + (+1) = (+1)\ \text{or}\ (-1) \hspace{3cm} \text{(Equation 9)}$$

The above axiom 2 is further classified by the right side as follows.

<1st group: in the case of the right side being (+1) > (+1) + (-1) = (+1) [value of the right side satisfies user requirements]

<2nd group: in the case of the right side being (-1)>

$$(-1) + (-1) = (-1)\ (-1) + null = (-1)\ (-1) + (1) = (-1)$$

$$null + (-1) = (-1)\ (1) + (-1) = (-1)$$

$$(+1) + (+1) = (-1)$$

[value in the right side does not satisfy user requirements]

<3rd group: in the case of the right side being (null)>

$$(null) + (null) = (null)\ (null) + (+1) = (null)\ (+1) +$$

$$(null) = (null) \hspace{3cm} \text{(Equation 10)}$$

As obvious from the equations 9 and 10, for meaning of the addition operator (+), for example, the right side becomes (-1) if there is at least one (-1) in the left side. If there is no (-1) and if there is at least one (null) in the left side, the right side is null. When all are (+1) in the left side, a state of the right side is (+1) if a value of the right side which is an end point satisfies the user requirements, and (-1) if it does not satisfy the user requirements.

The following theorems are proved by using the axioms 1 and 2.

(Theorem 1)

A state of an end-word becomes (+1) (true) when states of all start-words are (+1) (true) and a value of the end-word satisfies the user requirements <1st group of axiom 2>

(Proof)

If a state of a word is (+1) (true), 1·(+1) = (+1) is set by the axiom 1 when the word is used as a start-word. Accordingly, the start-word becomes (+1) (true). When the word is not used as a start-word, 0·* = (+1) (* represents one of three states) is set. Thus, a start point used for the axiom 2 becomes (+1) (true) irrespective of a state of the word. A result of performing the addition operation becomes (+1) (true) only in the case of the theorem 1 by the axiom 2.

(Theorem 2)

A state of an end-word becomes (-1) (false) when one of states of start-words is (-1) or when all the start-words are (+1) (true) and a value of the end-word does not satisfy the user requirements <2nd group of axiom 2>

(Proof)

If a state of one of words used as start-words is (-1), 1·(-1) = (-1) is set by the axiom 1, and thus a state of the start-word becomes (-1) (false). Accordingly, a result becomes (-1) (false) by the axiom 2. It is proved that when all the start-words are (+1) (true), (-1) (false) is set by the theorem 1 and <2nd group of axiom 2>

(Theorem 3)

A state of an end-word becomes null (undecided) when states of one or more start-words are null and states of remaining start-words are (+1) (true). <3rd group of axiom 2>

(Proof)

If states of one or more start-words are null and the remaining start-words are all (+1), a state of the end-word becomes null by the axiom 2.
The one-path process is expressed as $X_m = FX_{m-1}$. The following is established when repetition processing is continued:

$$X_1 = FX_0$$

$$X_2 = FX_1 = F^2X_0$$

$$X_m = FX_{m-1} = F^mX_0$$

$$X_{m+1} = FX_m = F^{m+1}X_0 \qquad \text{(Equation 11)}$$

$F^m$ is defined as ordinary matrix product. The (i, j) element of $F^m$ is non-negative integer.
The state of the end-word is changed from null to either (+1) or (-1) through repetition process which repeats the one-path process. As for this state, a state of the end-word is not changed even if the values of true (+1) and false (-1) are carried out during the repetition process. In the case of representation of a directed graph, when a closed loop exists in the graph and an end point is present in the closed loop, or when this system has no start point, a state of the end-word remains null even if it is repeated many times. "No change in the state (i.e., a fixed point is reached)" is expressed as $X_{m+1} = X_m$, and becomes as follows when the equation 6 is used.

$$F^{m+1}X_0 = F^mX_0$$

Where,

F:     adjacent matrix
X:     state vector (state of word is shown in column)
$X_0$:     initial state, i.e., all elements are null
m:     repetition number of times

The program will stop when this equation turns valid.

III. Method of preventing unnecessary iteration (rearrangement of execution order)

(III-1) Nature of adjacent matrix

The mathematical structure model has been established in the (II-2). All characteristics of the user requirements are indicated only by the adjacent matrix. Thus, it is very important and useful to check characteristics of the adjacent matrix.

A method of preventing unnecessary repetition by using the characteristics of the adjacent matrix F will be discussed. All types of programs (algorithms) can be explained only by using a comeback method. Procedurally, a comeback is realized by a while loop (a loop in which iteration ending conditions are designated by "while").

By using the equation 6, a state of "no change in any state" (i.e., "fixed point is reached") is represented as follows:

$$F^{m+1}X_0 = F^m X_0$$

Where,

F: adjacent matrix

X: a state vector which shows the state of the word in column

$X_0$: initial state, i. e., all elements are null

m: repetition number of times                    (Equation 12)

The program will stop when this equation turns valid.

In this case, a theorem 4 must be introduced to answer questions: what characteristics does the matrix F have?, and what is the property of the matrix F ?

The pair $G = (V, E)$ of the finite set V which is not empty and the subset E of $V \times V$ are called directed graphs. The element of V is called a vertex or a point, and the element $(u, v)$ of E is called an edge or an arrow. Finite sequence P of the point in G, $P = <v_1, v_2,..., V_n>$ is called a path from $v_0$ to $v_1$, and n is called a length of this path when $(v_{i-1}, v_i)$ $\in$ E is established for each i $(1 \leq i \leq n)$. A variable $v_0$ is called initial point of P, and a variable $v_n$ is called terminal point. $<v_0>$ is the path of length 0. The path is a route which tracks the point of G along with a direction of an adjacent arrow.

(Theorem 4)

An adjacent matrix of the directed graph V is defined as A. The $(i, j)$ element of $A^n$ indicates the number of paths of lengths n from $v_i$ to $v_j$ in G which is different from each other.

A program will stop when m = 1, m = 2, ... are continuously calculated and $F^{m+1}X_0 = F^m X_0$ is valid. The property of F and $F^m$ is investigated. Since all elements of $X_0$ are always null, F indicates all the properties of the system.

1) The case of $F^m = 0$ where $m \leq n$

All elements of $F^m$ are 0. By using the theorem 4, it is proved that a closed loop does not exist in the directed graph of this adjacent matrix. The variable m represents the length of the longest path of the directed graph. Eigen value of F is all 0. From the property of nilpotent matrix ($F^m = 0$), the matrix can be rearranged to be a lower triangular matrix F of the opposite angle element 0. In other words, $F' = P^{-1}FP$, where P : a regular or rectangular matrix.

Since $F(F^m X_0) = F^m X_0$, $F^{m+1}X_0 = F^m X_0$ is valid. All elements of Xm are (+1) or (-1).

2) The case of $F^m \neq 0$ where $m \leq n$

If a closed loop exists in the directed graph of the adjacent matrix, it is proved by using the theorem 4 that one or more integers appear in the opposite angle element $F_{ii}^{(r)}$: i = 1, ..., n of $F^r$. In this case, a variable r represents the shortest length of closed loop. Eigen value of F is not all 0, i. e., one of the eigen values is not equal to 0. Since all elements of $X_0$ are null, $F^{m+1}X_0 = F^m X_0$ is valid. The variable m indicates the length of the longest path before the loop of its directed graph. In an example of $X_m$, $X_m = {}^t[(+1), (+1), (null), (null), (null), (null)]$.

If there is no closed loop in the directed graph, its adjacent matrix becomes a nilpotent matrix ($F^m = 0$). This property is important for use.

(III-2) How to line up words to make iteration process unnecessary

In the case of representation by the "directed graph", as described above in the first section of the chapter III, when there is no "start-word and end-word" relation in the closed loop, it is possible to prevent a repetition process by arranging words in one-path process order so that the adjacent matrix may become a lower triangular matrix of the opposite angle clause 0.

It is difficult to obtain regular matrix P analytically. Topological sort is used in place of F' = P$^{-1}$FP. When partial ordered relation is given, arrangement of data in one line from work to be done at the beginning to work to be done at the end is called a topological sort. An answer is not always uniquely decided because it is data that is related to the partial order.

The topological sort can be carried out by a Depth-First Search (or longitudinal search) in the directed graph, and picking up a node when returned. This is carried out from each node, and results are arranged in reverse order. Arrangement of words in sequential processing (one-path process) only needs to employ this method to arrange the words.

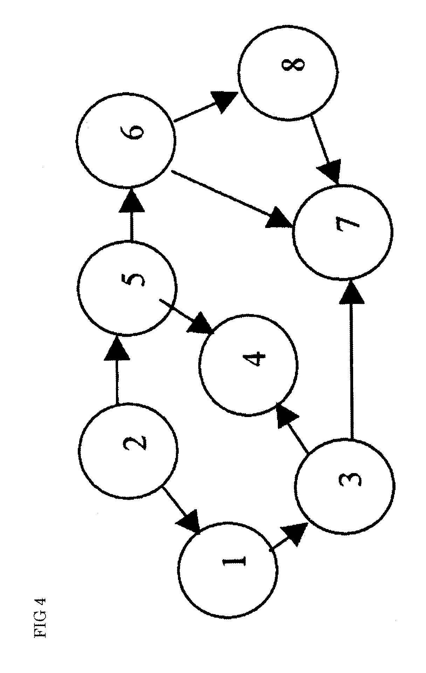

FIG. 4 is a directed graph showing a specific order relation formed by nodes 1 to 8.

That is, in an example of the drawing, the following can be defined by using the previously defined relation between the start-word and the end-word.

$$\text{Node } 2 \leq \text{node } 1$$

$$\text{Node } 1 \leq \text{node } 3$$

$$\text{Node } 3 \leq \text{node } 4, \text{node } 5 \leq \text{node } 4$$

$$\text{Node } 2 \leq \text{node } 5$$

$$\text{Node } 5 \leq \text{node } 6$$

$$\text{Node } 3 \leq \text{node } 7, \text{node } 6 \leq \text{node } 7, \text{node } 8 \leq \text{node } 7$$

$$\text{Node } 6 \leq \text{node } 8$$

(Example 4)

An adjacent matrix of the directed graph shown in FIG. 4 is represented by the following equation 13.

$$
F = \begin{matrix} & \begin{matrix} 1 & 2 & 3 & 4 & 5 & 6 & 7 & 8 \end{matrix} \\ \begin{matrix} 1 \\ 2 \\ 3 \\ 4 \\ 5 \\ 6 \\ 7 \\ 8 \end{matrix} & \begin{bmatrix} 0 & 1 & 0 & 0 & 0 & 0 & 0 & 0 \\ 0 & 0 & 0 & 0 & 0 & 0 & 0 & 0 \\ 1 & 0 & 0 & 0 & 0 & 0 & 0 & 0 \\ 0 & 0 & 1 & 0 & 1 & 0 & 0 & 0 \\ 0 & 1 & 0 & 0 & 0 & 0 & 0 & 0 \\ 0 & 0 & 0 & 0 & 1 & 0 & 0 & 0 \\ 0 & 0 & 1 & 0 & 0 & 1 & 0 & 1 \\ 0 & 0 & 0 & 0 & 0 & 1 & 0 & 0 \end{bmatrix} \end{matrix}, X = \begin{bmatrix} null \\ 1 \\ null \\ null \\ null \\ null \\ null \\ null \end{bmatrix}
$$

(Equation 13)

In the directed graph of FIG. 4, there is no start-word and end-word relation in the closed loop. Thus, topological sort is carried out so that the adjacent matrix of the partial ordered relation can become a low triangular matrix. A specific process is as follows:

(1) Depth-First Search is performed in the directed graph. That is, as an example, if a node 1 is set as a start point, search is performed by maintaining a partial ordered relation among unvisited nodes connected starting from the node 1 (i.e., process advances to connected unvisited nodes, returns to a node to be visited (comeback) when there are no more places to visit, advances again as far as possible, and comes to an end when there are no more places to visit (return from the comeback): this is called "recursive advancement"). Accordingly, a sequence of node 1 → node 3 → node 4 (*) → node 3 → node 7 (*) → node 3 (*) → node 1 (*) is obtained. (*) indicates a point of comeback time.
(2) Next, a start point is changed to the node 2, and search similar to the above is carried out. The process does not proceed to a place which has been visited. Thus, a sequence of node 2 → node 5 → node 6→ node 8 (*) → node 6 (*) → node 5 (*) → node 2 (*) is obtained.
(3) Search is carried out by setting the other nodes as start points. However, the search is finished as all the nodes have been visited.
(4) Nodes are picked up during return (comeback). Specifically, the nodes at points of time (*) in the (1) and (2) are picked up. In the above example, a sequence of node 4 (*) → node 7 (*) → node 3 (*) → node 1 (*) → node 8 (*) → node 6 (*) → node 5 (*) → node 2 (*) is obtained.
(5) Words are arranged in reverse order in sequential processing (one-path process). That is, reverse arrangement of the sequence of the nodes picked up in (4) is obtained as one solution. In the above example, a sequence of node 2→ node 5 → node 6 → node 8 → node 1 → node 3 → node 7 → node 4 is one solution to be obtained.

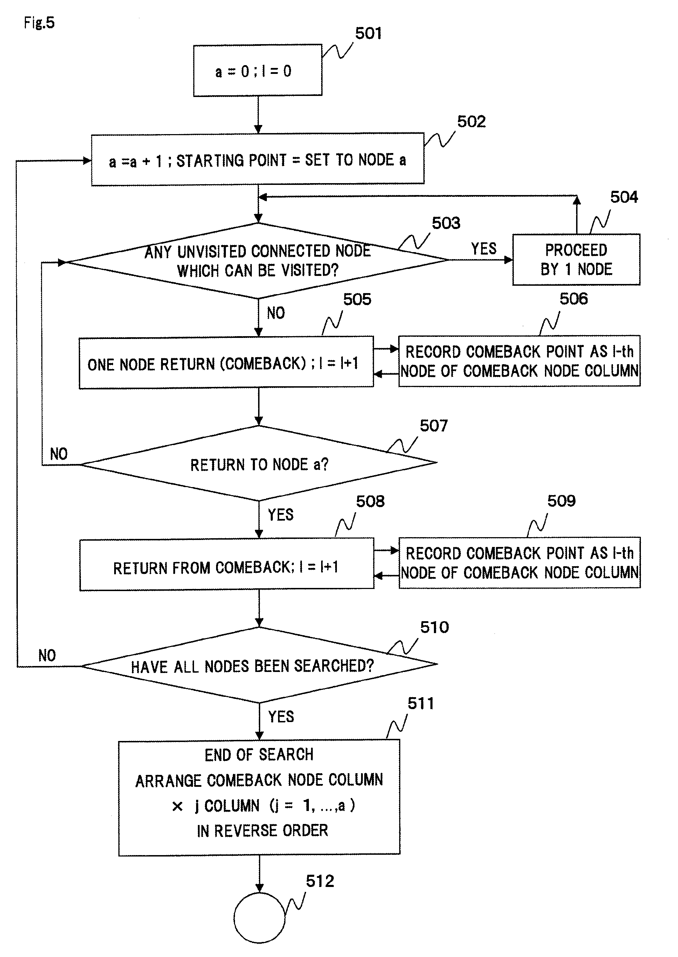

Thus, a result of the topological sort is (1, 2, 3, 4, 5, 6, 7, 8) → (2, 5, 6, 8, 1, 3, 7, 4), ("nodes" are omitted).
A specific topological sort method will next be described by using a flowchart. FIG. 5 is a flowchart showing a topological sort operation.
First, an initial value is set to a = 1, l = 1 (step 501).
Next, a = a + 1 is set, and a node a is set as a start point (step 502).
Search is started from here. Specifically, determination is made as to whether there are unvisited nodes among connected nodes to be visited (step 503). For example, this can be automatically determined by a method of setting a visit flag to each node, setting an initial value to 0 (indicating unvisited), and setting the visit flag to 1 when the node is visited.
When there is an unvisited node, the process proceeds by 1 node (step 504), and returns to the step 503.
When there is no unvisited node, the process returns by 1 node (comeback) to set l = l + 1 (step 505). At this time, a node concerning the comeback is set aside as an l-th element of a comeback node column (step 506).
Next, determination is made as to whether to have returned to the node a as a result of the comeback (step 507). If not yet returned, the process returns to the step 503. After the return to the node a, the search with the node a being set as the start point is finished. In other words, the process returns from the comeback to set I = I + 1 (step 508), and a comeback point is set aside as an I-th element of the comeback node column (step 509).

Here, checking is carried out as to whether all the nodes have been searched or not (step 510). If there is still nonsearched node, the process returns to the step 502 to change the start point and to start search again. When search of all the nodes has been completed, the search is finished. By arranging the set-aside comeback node columns in reverse order (step 511), one candidate of rearrangement is obtained, and a series of topological sort operations is finished (step 512).

Thus, by programming a topological sort algorithm itself in accordance with the aforementioned flowchart, it is possible to obtain an automatic topological sort program.

The F has been subjected to the topological sort. As a result, F' (topologically sorted F) is represented by the following equation 14.

$$F' = \begin{array}{c} \\ 2 \\ 5 \\ 6 \\ 8 \\ 1 \\ 3 \\ 7 \\ 4 \end{array} \begin{array}{cccccccc} 2 & 5 & 6 & 8 & 1 & 3 & 7 & 4 \\ \left[\begin{array}{cccccccc} 0 & 0 & 0 & 0 & 0 & 0 & 0 & 0 \\ 1 & 0 & 0 & 0 & 0 & 0 & 0 & 0 \\ 0 & 1 & 0 & 0 & 0 & 0 & 0 & 0 \\ 0 & 0 & 1 & 0 & 0 & 0 & 0 & 0 \\ 1 & 0 & 0 & 0 & 0 & 0 & 0 & 0 \\ 0 & 0 & 0 & 0 & 1 & 0 & 0 & 0 \\ 0 & 0 & 1 & 1 & 0 & 1 & 0 & 0 \\ 0 & 1 & 0 & 0 & 0 & 1 & 0 & 0 \end{array}\right] \end{array}$$

(Equation 14)

As a result of the topological sort, the order of one-path process is changed from "1, 2, 3, 4, 5, 6, 7, 8" to "2, 5, 6, 8, 1, 3, 7, 4".

Thus, F' is obtained. However, as obvious from its shape, this F' is a lower triangular column in which all items of an upper triangle are 0. In the F' (sorted adjacent matrix), because of its structure (only 0 is present in the upper triangular part), a start-word for obtaining a certain node (end-word) is present only at a node of a row above that node (of the already sorted adjacent matrix). Thus, by sequentially obtaining values from an upper row of the F', as compared with doing the same in the F, values of all nodes are smoothly obtained without any iterations or returns.

Next, one of methods of applying the aforementioned topological sort to the Lyee (registered trademark) methodology will be described.

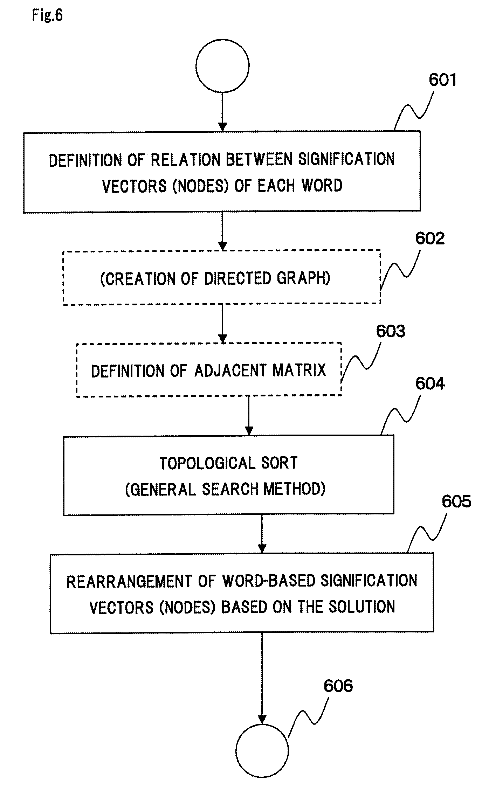

FIG. 6 is a flowchart explaining an automatic control operation of avoiding iteration by treating a word-based signification vector in the Lyee (registered trademark) methodology as nodes and using topological sort.

As shown in the drawing, first, a relation between signification vectors (regarded as nodes) of each word is defined (step 601).

Accordingly, for example, a directed graph may be created (step 602), but the invention is not limited to this.

Next, an adjacent matrix (described above) is defined for the nodes (step 603).

The aforementioned topological sort is carried out against this adjacent matrix (step 604). The specific topological sort algorithm has been described in detail with reference to FIG. 5, and thus description thereof will be omitted here. The topological sort is taken for explanation here as an example of a search technology. Needless to say, however, the other search described above may be executed in the step 604.

Lastly, based on one solution obtained as a result of the topological sort above, the word-based signification vectors (nodes) are rearranged (step 605), and the operation is finished (step 606).

The step of defining the adjacent matrix (step 603) is included here to assist understanding, but it is not an essential step. That is, the process going from the definition of the relation between the word-based signification vectors (step 601) directly or via the directed graph creation (step 602) to the search step such as the topological sort or the like (step 604) without defining the adjacent matrix is also within the scope of the idea of the invention, and can achieve the object of the invention.

Thus, the software based on the Lyee (registered trademark) methodology in which iteration is omitted by applying the topological sort to the word-based signification vectors extracted from the user requirements by the Lyee (registered trademark) methodology can be generated before execution of the automatic software generation program of the Lyee (registered trademark) methodology.

In other words, if the nodes are regarded as the word-based signification vectors in the Lyee (registered trademark) methodology, by obtaining F' based on the aforementioned method, an object of obtaining a value (deciding significance) of a certain word can be achieved by only one RUN without executing iteration process many times.

Moreover, as obvious from the foregoing, the topological sort algorithm can be made automatic by being programmed itself as software.

Thus, the automatic software generation method based on the Lyee (registered trademark) methodology can also be made automatic to achieve high efficiency and quality.

In the above, as the word order relation represented by the directed graph mainly the partial ordered relation has been described. Needless to say, however, the foregoing explanation applies not only to the case of the partial ordered relation but also to the case of total ordered relations or to the case of a mixture of total ordered relations and partial ordered relations.

The creation of the adjacent matrix after the creation of the directed graph has been described above from the standpoint of facilitating the understanding. However, the invention can be realized by directly creating an adjacent matrix based on a mutual relation between word-based programs without creating a directed graph.

The program structures to be made for all the words and the program structure of the Tense Control Vector used for controlling the programs have explicitly been described. Besides, the programs have been proved to properly operate mathematically.


IV. Conclusion

As described above in detail, according to the present invention, the mathematical structure model of the word-based program defining the word state is created and, by applying the model to the software development of the Lyee (registered trademark) methodology, the development of higher efficiency, higher speed and higher performance is realized.

The word states constitute the complete partial order. The order has null words as minimum elements (very small points) of the word. This structure model can be proved mathematically correct by using the directed graph and the adjacent matrix.

Further, according to the invention, the general idea of the palette and the validity of the basic structure have been considered. These are necessary for creating a program in practice. The structures for realizing the algorithm of sequential reading or the like and the total value calculation have been described. These general ideas are used for the system development method of the Lyee (registered trademark) methodology. These ideas have produced many practically useful results in a number of industrial application fields.

Interface and communication between the human user and the external device have been also discussed. These justify real work of designing (modeling) a program based on a word unit for such a system type.

In short, according to the present invention, the mathematical way of thinking, method and analysis is applied to the software development, the development technology of the Lyee (registered trademark) methodology. Thus, it is possible to realize the software development more efficiently and accurately at a higher speed.

According to the invention, many changes and modifications can be made by those who have usual knowledge in the technical field. Thus, the invention should not be limited to the configurations or the operations strictly described with reference to the drawings. Accordingly, proper changes and equivalents can all be within the scope of the invention. The invention has been described in detail by way of specific embodiment and example. However, many modifications, substitutions, and changes can be made without departing not only from the scope of claims of the invention but also from the scope of the invention defined in all the disclosed items.

The application of the invention should not be limited to the foregoing description or explanation, or specific appreciation or combinations of the shown elements. Other embodiments are possible, and the invention can be used and implemented by various methods. Moreover, the terms and the phrases used here are only descriptive and should not be regarded as limitative.

Thus, as easily understood by those who have usual knowledge in the technical field, the disclosed basic concept can be easily used as a basis for designing other structures, methods and systems for implementing some objects of the invention. Accordingly, such equivalent appreciation is within the scope of the claims of the invention as long as it does not depart from the gist and the scope of the invention.

The method of realizing the idea of the invention has been described in detail in the order of the directed graph representation, the adjacent matrix calculation, the topological sort, and the rearrangement. However, these are not absolutely essential elements. For example, the idea of the invention may be realized directly in an order of adjacent matrix calculation → topological sort → rearrangement without executing directed graph representation.

Additionally, rearrangement may be made by combining various search methods such as Breadth-First Search, Iterative Deeping, Heuristic Search, Hill Climbing, Best-First Search, Euler's single stroke of a brush, Dijkstra method, and the like with the directed graph.

Alternatively, the basic idea of the invention may be realized by combining such various search methods after the adjacent matrix calculation.

Needless to say, the technical idea of the invention can be realized and used as e.g., an automatic development device, an automatic development program of computer software, or a recording medium, a transmission medium, or a paper medium recording the automatic development program, and in a category of a computer/device on which the automatic development program is mounted, a client server form for executing the automatic development program, or the like.

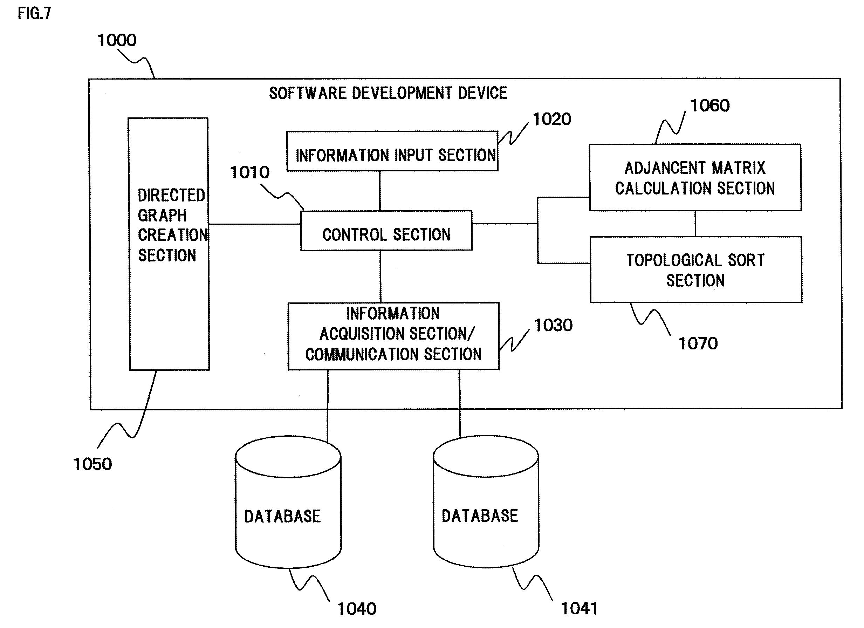

FIG. 7 is a block diagram showing a functional configuration when the present invention is realized as a software development device. That is, in an example shown in the drawing, a software development device 1000 comprises the following elements.

A control section 1010 has a function of the entire control and of automatically executing software development based on the Lyee (registered trademark) methodology. In other words, it has a function of obtaining codes generated by automatically applying a group of word-based programs rearranged by (directed graph creation section 1050,) an adjacent matrix calculation section 1060, and a topological sort section 1070 described later to the Lyee methodology.

An information input section 1020 functions as an interface for inputting human intentions such as user requirements concerning the Lyee (registered trademark) methodology to a computer through a screen (not shown) or the like. An information acquisition section/communication section 1030 communicates with the outside or transfers information with databases 1040, 1041 or the like (when they are present in the software development device 1000). Needless to say, in this example, the databases 1040, 1041 may be included in the software development device 1000.

The directed graph creation section 1050 has a function of extracting a partial ordered relation from the user requirements concerning the Lyee (registered trademark) methodology, and creating a directed graph out of it based on control of the control section 1010 as described above. The adjacent matrix calculation section 1060 calculates/creates an adjacent matrix similar to that described above for the directed graph created by the directed graph creation section 1050 based on the control of the control section 1010. The topological sort section 1070 has a function of executing the aforementioned topological sort for the adjacent matrix calculated/created by the adjacent matrix calculation section 1060 based on the control of the control section 1010.

The topological sort section 1070 is one example having a search function. As described above, the idea of the invention is realized as a search section (general) having a function of realizing the other search methods.

With this configuration, all these sections (1010 to 1070, thus 1000) can be automated, whereby a process from elimination of iteration process to software generation can consistently be made automatic. Thus, it is possible to greatly increase a software production speed and efficiency.

Thus, the invention is realized as software incorporating the functions as programs to realize the same, as software of the foregoing elements of the invention by writing such software in, e.g., a read-only memory (ROM) and providing an entire system (device) incorporating the ROM, or a software development device incorporating such software.

The invention is applied not only to a computer system equipped with a single processor, a single hard disk drive, and a single local memory, but also to a system equipped with a plurality of optional or combined processors or memory devices as options of the system. The computer system includes an elaborate calculator, a hand type computer, a laptop/notebook computer, a minicomputer, a main frame computer, a supercomputer, and a processing system network combination thereof. An optional proper processing system that operates in accordance with the principle of the invention may be used instead, or can be used in combination with the above.

Needless to say, the technical idea of the invention can deal with all kinds of programming languages. Moreover, the technical idea of the invention can be applied to all kinds/functions of application software.

According to the invention, various changes, additions, substitutions, expansions, reductions, and the like can be made within similar ideas, equivalents, and the scope of the technical idea. Even when software produced by using the invention is mounted on a secondary product and commercialized, a value of the invention is not reduced.

As described above, according to the present invention, in the software development by the Lyee (registered trademark) methodology, it is possible to realize higher efficiency, higher speed and higher performance.

Industrial Applicability

According to the present invention, preprocessing is automatically carried out to avoid iteration, and an object program is automatically generated by the Lyee (registered trademark) methodology based on a preprocessed word-based program thus obtained. Thus, the invention provides great advantages to the software industry, such as a great efficiency increase, a productivity increase, and quality improvement of software production.

**Claims**

1. A software development preprocessing method **characterized by**,

representing an order relation among word-based programs for obtaining values for areas of words concerning a software development requirement in a directed graph;

executing search against the directed graph represented; and

rearranging a group of the word-based programs based on a result of the search.

2. A software development preprocessing method **characterized by**,

generating an adjacent matrix from an order relation among word-based programs for obtaining values for areas of words concerning a software development requirement;

executing search against the generated adjacent matrix; and

rearranging a group of the word-based programs based on a result of the search.

3. The software development preprocessing method according to claim 2, **characterized in that** the search is executed by topological sort.

4. A software development preprocessing method **characterized by**,

generating an adjacent matrix and a state vector from a significance definition relation among words in user requirements of a software development;

calculating the adjacent matrix and the state vector based on a predetermined axiom; and

grasping states of the words from a result of the calculation.

5. The software development preprocessing method according to claim 1 or 2, **characterized in that** when there area a plurality of basic structures in which a set concerning the order relation among the word-based programs is a closed unit, a final value of an output of one basic structure is output to a boundary area.

6. The software development preprocessing method according to claim 1 or 2, **characterized in that** when there are a plurality of basic structures in which a set concerning the order relation among the word-based programs is a closed unit, and the basic structures constitute a closed loop, nodes (basic structures) in the loop are connected.

7. A software control method, **characterized by** representing an order relation among word-based programs for obtaining values for areas of words concerning a software development requirement in a directed graph.

8. A software control method **characterized by**,

constituting a basic structure unit in units in which a set concerning an order relation among word-based programs for obtaining values for areas of words concerning a software development requirement is a closed unit; and

representing the basic structure unit thus constituted in a directed graph in which the structure unit is regarded as a node.

9. A software development method **characterized by**,

generating an adjacent matrix from an order relation among word-based programs for obtaining values for areas of words concerning a software development requirement,

executing search in the generated adjacent matrix and rearranging a group of the word-based programs based on a result of the search; and

generating codes by applying the rearranged group of the word-based programs to Lyee methodology.

10. A software development device **characterized by** comprising,

an adjacent matrix calculation section for generating an adjacent matrix from an order relation among word-based programs for obtaining values for areas of words concerning a software development requirement;

a search section for performing search against the generated adjacent matrix and rearranging a group of the word-based programs based on a result of the search; and

a generation section for generating codes by applying the rearranged group of the word-based programs to Lyee methodology.

Fig. 1

BOX 1 — IS α =NULL?

(1)

BOX 2

(2)

BOX 3    BOX 5    IS VALUE FALSE?

IS VALUE TRUE?

(3)    (5)

BOX 6    BOX 7

BOX 4

(4)    (6)    (7)

303    305    307    301

STATE    STATE    STATE
= TRUE    = FALSE    = UNDECIDED

EP 1 591 887 A1

FIG 2

FIG 3

FIG 4

EP 1 591 887 A1

EP 1 591 887 A1

Fig.5

```
                              ┌─────────────────┐  501
                              │   a = 0 ; l = 0 │
                              └─────────────────┘
                                      │
                    ┌─────────────────────────────────────┐  502
          ┌────────▶│ a = a + 1 ; STARTING POINT = SET TO │
          │         │              NODE a                 │
          │         └─────────────────────────────────────┘
          │                          │
          │                          ▼         503          504
          │         ◇ ANY UNVISITED CONNECTED NODE ◇  YES  ┌──────────┐
          │         ◇   WHICH CAN BE VISITED?        ◇────▶│ PROCEED  │
          │         ◇                                ◇     │ BY 1 NODE│
          │                     │ NO                       └──────────┘
          │                     ▼  505                         506
          │       ┌──────────────────────────────┐  ┌──────────────────────────┐
          │       │ ONE NODE RETURN (COMEBACK) ;  │◀─│ RECORD COMEBACK POINT AS │
          │       │         l = l+1               │─▶│ l-th NODE OF COMEBACK    │
          │       └──────────────────────────────┘  │     NODE COLUMN          │
          │                     │                    └──────────────────────────┘
          │                     ▼         507
          │      NO  ◇ RETURN TO NODE a? ◇
          ├─────────◇                    ◇
          │                     │ YES  508                        509
          │       ┌──────────────────────────────┐  ┌──────────────────────────┐
          │       │ RETURN FROM COMEBACK; l = l+1 │◀─│ RECORD COMEBACK POINT AS │
          │       │                               │─▶│ l-th NODE OF COMEBACK    │
          │       └──────────────────────────────┘  │     NODE COLUMN          │
          │                     │                    └──────────────────────────┘
          │                     ▼         510
          │  NO  ◇ HAVE ALL NODES BEEN SEARCHED? ◇
          └─────◇                                ◇
                               │ YES  511
                 ┌──────────────────────────────────┐
                 │           END OF SEARCH           │
                 │   ARRANGE COMEBACK NODE COLUMN    │
                 │     × j COLUMN  (j = 1, ...,a )   │
                 │          IN REVERSE ORDER         │
                 └──────────────────────────────────┘
                               │
                               ▼  512
                              (  )
```

Fig.6

```
                    ( )
                                                    601
    ┌─────────────────────────────────────────┐
    │  DEFINITION OF RELATION BETWEEN SIGNIFICATION │
    │      VECTORS (NODES) OF EACH WORD         │
    └─────────────────────────────────────────┘
                     │
                     ▼                              602
    ┌ ─ ─ ─ ─ ─ ─ ─ ─ ─ ─ ─ ─ ─ ─ ─ ─ ─ ─ ┐
    │      (CREATION OF DIRECTED GRAPH)        │
    └ ─ ─ ─ ─ ─ ─ ─ ─ ─ ─ ─ ─ ─ ─ ─ ─ ─ ─ ┘
                     │
                     ▼                              603
    ┌ ─ ─ ─ ─ ─ ─ ─ ─ ─ ─ ─ ─ ─ ─ ─ ┐
    │   DEFINITION OF ADJACENT MATRIX    │
    └ ─ ─ ─ ─ ─ ─ ─ ─ ─ ─ ─ ─ ─ ─ ─ ┘
                     │                              604
                     ▼
    ┌─────────────────────────────────────────┐
    │           TOPOLOGICAL SORT               │
    │       (GENERAL SEARCH METHOD)            │
    └─────────────────────────────────────────┘
                     │                              605
                     ▼
    ┌─────────────────────────────────────────┐
    │  REARRANGEMENT OF WORD-BASED SIGNIFICATION │
    │   VECTORS (NODES) BASED ON THE SOLUTION  │
    └─────────────────────────────────────────┘
                     │
                     ▼                              606
                    ( )
```

FIG.7

SOFTWARE DEVELOPMENT DEVICE — 1000

1060

INFORMATION INPUT SECTION — 1020

ADJANCENT MATRIX CALCULATION SECTION

1010

DIRECTED GRAPH CREATION SECTION

CONTROL SECTION

TOPOLOGICAL SORT SECTION

INFORMATION ACQUISITION SECTION/ COMMUNICATION SECTION — 1030

1070

1050

DATABASE

DATABASE

1040

1041

EP 1 591 887 A1

**EP 1 591 887 A1**

## INTERNATIONAL SEARCH REPORT

| International application No. |
| --- |
| PCT/JP03/09591 |

**A. CLASSIFICATION OF SUBJECT MATTER**
Int.Cl$^7$ G06F9/44

According to International Patent Classification (IPC) or to both national classification and IPC

**B. FIELDS SEARCHED**

Minimum documentation searched (classification system followed by classification symbols)
Int.Cl$^7$ G06F9/44

Documentation searched other than minimum documentation to the extent that such documents are included in the fields searched

| | | | |
| --- | --- | --- | --- |
| Jitsuyo Shinan Koho | 1926–1996 | Jitsuyo Shinan Toroku Koho | 1996–2003 |
| Kokai Jitsuyo Shinan Koho | 1971–2003 | Toroku Jitsuyo Shinan Koho | 1994–2003 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| X<br>Y | Motonori NAKAMURA et al., "Jido Vector-ka<br>Compiler ni okeru Idiom Ninshikiho", Transactions<br>of Information Processing Society of Japan,<br>15 April, 1991 (15.04.91), Vol.32, No.4,<br>pages 491 to 503 | 1–8<br>9,10 |
| Y | JP 2001-5651 A (The Institute of Computer Based<br>Software Methodology and Technology, Information<br>System Development Institute),<br>12 January, 2001 (12.01.01),<br>Full text; all drawings<br>& WO 00/79385 A1 & EP 1244006 A1<br>& CA 2414110 A & AU 5427900 A<br>& CN 1376279 T | 9,10 |

☒ Further documents are listed in the continuation of Box C. ☐ See patent family annex.

| | |
| --- | --- |
| * Special categories of cited documents:<br>"A" document defining the general state of the art which is not considered to be of particular relevance<br>"E" earlier document but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |
| Date of the actual completion of the international search<br>20 October, 2003 (20.10.03) | Date of mailing of the international search report<br>28 October, 2003 (28.10.03) |
| Name and mailing address of the ISA/<br>Japanese Patent Office | Authorized officer |
| Facsimile No. | Telephone No. |

Form PCT/ISA/210 (second sheet) (July 1998)

28

**EP 1 591 887 A1**

<table>
<tr><td colspan="2">INTERNATIONAL SEARCH REPORT</td><td>International application No.</td></tr>
<tr><td colspan="2"></td><td>PCT/JP03/09591</td></tr>
</table>

| C (Continuation). DOCUMENTS CONSIDERED TO BE RELEVANT | | |
|---|---|---|
| Category* | Citation of document, with indication, where appropriate, of the relevant passages | Relevant to claim No. |
| A | JP 4-51328 A (Fujitsu Ltd.), 19 February, 1992 (19.02.92), Full text; all drawings (Family: none) | 1-8 |
| A | JP 9-120387 A (Fujitsu Ltd.), 06 May, 1997 (06.05.97), Full text; all drawings & US 6178459 B1 | 7 |

Form PCT/ISA/210 (continuation of second sheet) (July 1998)